# EUROPÄISCHE PATENTSCHRIFT

(11) **EP 3 315 349 B1**
(45) Veröffentlichungstag und Bekanntmachung des Hinweises auf die Patenterteilung: **18.09.2024**
(21) Anmeldenummer: 17193767.5
(22) Anmeldetag: 28.09.2017
(51) Int. Cl.: B60L 53/126, B60L 53/38

(54) **FLURFÖRDERZEUG MIT EINEM EINE TRAKTIONSBATTERIE AUFWEISENDEN BATTERIE-ELEKTRISCHEN ANTRIEBSSYSTEM**
INDUSTRIAL TRUCK WITH A BATTERY ELECTRICAL DRIVE SYSTEM HAVING A TRACTION BATTERY
CHARIOT DE MANUTENTION POURVU D'UNE BATTERIE DE TRACTION COMPORTANT UN SYSTÈME D'ENTRAÎNEMENT ALIMENTÉ ÉLECTRIQUEMENT PAR DES BATTERIES

(30) Priorität: 28.10.2016 DE 102016120693
(43) Veröffentlichungstag der Anmeldung: 02.05.2018
(73) Patentinhaber: STILL GmbH, 22113 Hamburg (DE)
(72) Erfinder: HAAKE, Kai, 21073 Hamburg (DE); MEY, Jörn, 23879 Mölln (DE)
(74) Vertreter: Patentship Patentanwaltgesellschaft

(56) Entgegenhaltungen:
- WO-A1-2010/090333
- WO-A1-2014/057587
- DE-A1- 102011 056 807
- DE-A1- 102011 089 339
- DE-T5- 112012 007 040
- DE-U1- 202009 009 693
- JP-A- 2009 089 520
- JP-A- 2012 085 472
- JP-A- H0 739 007

## Beschreibung

Die Erfindung betrifft ein Flurförderzeug mit einem eine Traktionsbatterie aufweisenden batterie-elektrischen Antriebssystem und mit einer Sekundärspulenplatte einer induktiven Ladevorrichtung zum Laden der Traktionsbatterie des Flurförderzeugs.

Aus der WO 2014/057587 A1 ist ein gattungsgemäßes Flurförderzeug bekannt, das eine Traktionsbatterie und eine Sekundärspule einer induktiven Ladevorrichtung aufweist.

Aus der DE202009009693U U1 ist ein weiteres Flurförderzeug mit einer Sekundärspule bekannt.

Bei Flurförderzeugen mit einem batterie-elektrischen Antriebssystem ist es bekannt, zum Laden der Traktionsbatterie des Flurförderzeugs eine induktive Ladevorrichtung vorzusehen, die ein kontaktloses Laden der Traktionsbatterie mit elektrischer Energie ermöglicht. Eine induktive Ladevorrichtung nutzt zumindest ein Spulenpaar, das ein gemeinsamer Fluss eines magnetischen Wechselfeldes durchströmt. Ein Spulenpaar besteht jeweils aus einer an einer Ladestation angeordneten Primärspule und einer an dem Flurförderzeug angeordneten Sekundärspule. Die Primärspule ist häufig als Primärspulenplatte und die Sekundärspule als Sekundärspulenplatte ausgebildet.

Dabei sind Anordnungen bekannt, bei denen die Sekundärspulenplatte an der Fahrzeugunterseite am Fahrzeugboden des Flurförderzeugs angeordnet ist und die Primärspulenplatte auf der Fahrbahn angeordnet ist oder in die Fahrbahn integriert ist. Bei einer derartigen Anordnung verläuft die Hauptrichtung der magnetischen Flussdichte der Spulen in vertikaler Richtung, um die Flächen der beiden Platten maximal durchfluten zu können. Der Abstand und die Ausrichtung zwischen der Sekundärspulenplatte und der Primärspulenplatte sind für eine optimale Leistungsübertragung von großer Bedeutung.

Bei einer Anordnung der Sekundärspulenplatte an der Fahrzeugunterseite am Fahrzeugboden des Flurförderzeugs und der Primärspulenplatte auf oder in der Fahrbahn weist die Sekundärspulenplatte von der Primärspulenplatte einen Luftspalt in vertikaler Richtung auf. Um diesen Luftspalt in vertikaler Richtung zu minimieren und die magnetische Kopplung der Sekundärspulenplatte mit der Primärspulenplatte zu optimieren, kann die an der Fahrbahn befindliche Primärspulenplatte angehoben werden.

Die induktive Leistungsübertragung zwischen der an der Fahrbahn befindlichen Primärspulenplatte und der am Flurförderzeug angeordneten Sekundärspulenplatte ist optimal, wenn der gesamte magnetische Fluss in vorgesehener Weise durch die Spulenpaare geht und kein Streufeld aufritt. Verschiebungen und somit Abweichungen der Sekundärspulenplatte zu der Primärspulenplatte in eine oder mehrere der drei translatorischen Richtungen führen jedoch zum Auftreten eines Streufeldes. Zudem führen Winkelabweichungen und somit rotatorische Abweichungen der Sekundärspulenplatte zu der Primärspulenplatte um eine oder mehrere der drei Raumachsen zum Auftreten bzw. zur Erhöhung eines Streufeldes.

Bei einer Anordnung der Sekundärspulenplatte an der Fahrzeugunterseite am Fahrzeugboden des Flurförderzeugs und der Primärspulenplatte auf oder in der Fahrbahn kann es durch ein ungenaues Positionieren des Flurförderzeugs mit der Sekundärspulenplatte über der an der Fahrbahn angeordneten Primärspulenplatte zu translatorischen Abweichungen der Sekundärspulenplatte zur Primärspulenplatte in Längsrichtung und in Querrichtung der Platten kommen. Zudem kann eine rotatorische Abweichung um die vertikale Achse auftreten. Durch die zusätzliche Einwirkung einer Beladung des Flurförderzeugs und einer damit einhergehenden Einfederung des Flurförderzeugs sowie den Verschleiß der Bereifung des Flurförderzeug bzw. die Bodenfreiheit und/oder unterschiedlichen Bereifungsvarianten des Flurförderzeugs kann es zu einer translatorischen Abweichung in vertikaler Richtung sowie zu rotatorischen Abweichungen um die Längsachse und um die Querachse kommen. Insgesamt können somit Abweichungen der Sekundärspulenplatte zur Primärspulenplatte in allen sechs Freiheitsgraden auftreten.

Mit einer Betrachtung des Streufeldes und des Erfordernisses eines Betriebs der induktiven Leistungsübertragung im Resonanzpunkt ergeben sich bei einem Flurförderzeug mit einer induktiven Ladevorrichtung der Traktionsbatterie folgende Probleme:
Im Falle des Auftretens eines Streufeldes durch translatorische und/oder rotatorische Abweichungen der Sekundärspulenplatte zu der Primärspulenplatte steht nicht mehr die maximale Koppelfläche für die Leistungsübertragung zur Verfügung, insbesondere steht das auftretende Streufeld nicht mehr effizient für die Wirkleistungsübertragung zur Verfügung, und es sinkt der Wirkungsgrad.

Ein erhöhtes Streufeld kann zudem zu der Notwendigkeit einer Leistungsreduzierung führen, um Grenzwerte einzuhalten, wenn die induktive Ladevorrichtung in Bereichen betrieben wird, in denen sich ebenfalls Personen aufhalten. Hierbei ist insbesondere zu beachten, dass geringe Abweichungen der Spulenplatten zueinander ein geringes Streufeld aufweisen und große Abweichungen der Spulenplatten zueinander ein großes Streufeld.

Eine induktive Ladevorrichtung arbeitet stets im Resonanzpunkt. Dies erfordert es, die Spulenplatten und deren Betrieb auf eine bestimmte geometrische Konfiguration und somit eine bestimmte Ausrichtung der Spulenplatten zueinander anzupassen. Sofern an der induktiven Ladevorrichtung Abweichungen der Spulenplatten zueinander auftreten, kann die Anpassung auf elektrischem bzw. auf elektronischem Wege nachgeführt werden. Dabei kann davon ausgegangen werden, dass nicht an allen Anpassungspunkten das Optimum der Leistungsübertragung erzielt wird, so dass entsprechende Verluste entstehen.

Bei einer induktiven Ladevorrichtung mit einer an einer Ladestation angeordneten Primärspulenplatte und einer an einem Flurförderzeug angeordneten Sekundärspulenplatte ist somit das maßgebliche Problem, dass die Leistungsübertragung mit zunehmenden translatorischen Abweichungen und zunehmenden rotatorischen Abweichungen der Spulenplatten zueinander von der optimalen geometrischen Konfiguration geringer wird.

Aus der DE 10 2011 089 339 A1 ist ein Fahrzeug mit einer Sekundärspule einer induktiven Ladevorrichtung bekannt, bei der der Spulenkern in z-Richtung (vertikaler Richtung) mittels eines Stellglieds abgesenkt und mittels einer Rückholfeder angehoben werden kann, um den Spulenkern auf die Primärspule absenken zu können und den Luftspalt zur Primärspule zu minimieren.

Die WO 2010/090333 A1 offenbart ein Fahrzeug mit einer Sekundärspule einer induktiven Ladevorrichtung. Gemäß der Figur 5 der WO 2010/090333 A1 kann die Sekundärspule mit einem Aktuator angehoben und absenkt werden. In der Figur 9 der WO 2010/090333 A1 ist eine Anordnung gezeigt, bei der die Sekundärspule mit einem Aktuator angehoben und absenkt werden und zusätzlich die Sekundärspule in Fahrzeuglängsrichtung (y-Achse) translatorisch verstellt werden kann.

Die JP H07 039007 A offenbart eine Anordnung, bei dem eine Primärspule einer induktiven Ladevorrichtung in der Fahrbahn angeordnet ist und die Sekundärspule am Fahrzeugboden angeordnet ist. Um die Sekundärspule parallel und in einem definierten Abstand zur Fahrbahn halten zu können, ist die Sekundärspule mit Antrieben verstellbar am Fahrzeugboden angeordnet.

Der vorliegenden Erfindung liegt die Aufgabe zugrunde, ein Flurförderzeug mit einem eine Traktionsbatterie aufweisenden batterie-elektrischen Antriebssystem und mit einer Sekundärspulenplatte einer induktiven Ladevorrichtung zum Laden der Traktionsbatterie des Flurförderzeugs zur Verfügung zu stellen, bei dem das Streufeld minimiert ist und die induktive Leistungsübertragung einen hohen Wirkungsgrad aufweist.

Diese Aufgabe wird erfindungsgemäß dadurch gelöst, dass die Sekundärspulenplatte mit einem Ausrichtmechanismus an dem Flurförderzeug beweglich angeordnet ist, der ausgeführt ist, das Streufeld der induktiven Ladevorrichtung zu minimieren, wobei der Ausrichtmechanismus eine Ausrichtung der Sekundärspulenplatte zu einer Primärspulenplatte der induktiven Ladevorrichtung in mindestens einer translatorischen Achse und/oder um zumindest eine Rotationsachse ermöglicht, wobei der Ausrichtmechanismus translatorische Abweichungen der Sekundärspulenplatte zu der Primärspulenplatte der induktiven Ladevorrichtung in Richtung einer vertikalen Achse ausgleicht und rotatorische Abweichungen der Sekundärspulenplatte um eine Längsachse des Flurförderzeugs, um eine Querachse des Flurförderzeugs und um die vertikale Achse ausgleicht. Der erfindungsgemäße Gedanke besteht somit darin, die Sekundärspulenplatte an dem Flurförderzeug mittels eines Ausrichtmechanismus beweglich anzuordnen, der es ermöglicht, nach dem Positionieren des Flurförderzeugs mit der daran angeordneten Sekundärspulenplatte an der Primärspulenplatte der Ladevorrichtung bestehende translatorische und rotatorische Abweichungen der Sekundärspulenplatte zur Primärspulenplatte zu kompensieren und auszugleichen. Mit einem derartigen Ausrichtmechanismus wird es auf einfache Weise ermöglicht, translatorische und rotatorische Abweichungen der Sekundärspulenplatte zu der Primärspulenplatte in einem oder mehreren Freiheitsgraden auszugleichen und zwischen der Sekundärspulenplatte und der Primärspulenplatte eine optimale geometrische Konfiguration mit minimalem Abstand und optimaler Ausrichtung zu erzielen, in der eine optimale induktive Leistungsübertragung erzielt wird. Der Ausrichtmechanismus ermöglicht es, das Streufeld zu minimieren und damit den Wirkungsgrad der induktiven Leistungsübertragung zu erhöhen. Zudem kann durch den Ausrichtmechanismus und das reduzierte Streufeld die induktive Ladevorrichtung mit einer hohen Nominalleistung betrieben werden. Der Ausrichtmechanimus ermöglicht es weiterhin, die induktive Ladevorrichtung in einem konstanten Resonanzpunkt zu betrieben und in diesem zu optimieren.

Gemäß einer vorteilhaften Ausgestaltungsform der Erfindung gleicht der Ausrichtmechanismus translatorische Abweichungen der Sekundärspulenplatte zu der Primärspulenplatte der induktiven Ladevorrichtung in Richtung der Längsachse und/oder in Richtung der Querachse aus. Bevorzugt ermöglicht es der Ausrichtmechanismus, Abweichungen der Sekundärspulenplatte zur Primärspulenplatte in allen sechs Freiheitsgraden zu kompensieren und somit alle translatorischen Abweichungen und rotatorischen Abweichungen der Sekundärspulenplatte zu der Primärspulenplatte auszugleichen.

Gemäß einer vorteilhaften Ausgestaltungsform der Erfindung weist der Ausrichtmechanismus einen Stellantrieb auf, mit dem die Sekundärspulenplatte zwischen einer von der Primärspulenplatte abgehobenen Stellung und einer auf die Primärspulenplatte abgesenkten Stellung in einer translatorischen Achse bewegbar am Flurförderzeug angeordnet ist, und eine Passungseinrichtung auf, die eine translatorische Abweichung der Sekundärspulenplatte zu der Primärspulenplatte der induktiven Ladevorrichtung in Richtung mindestens einer weiteren Achse und/oder eine rotatorische Abweichung der Sekundärspulenplatte um mindestens eine Achse ausgleicht. Mit dem Stellanantrieb kann in der abgesenkten Stellung der Sekundärspulenplatte durch einen minimalen Luftspalt zwischen der Sekundärspulenplatte und der Primärspulenplatte die Abweichung in einer translatorischen Achse und somit in einem Freiheitsgrad minimiert werden. Die zusätzliche Passungseinrichtung ermöglicht es, die Sekundärspulenplatte zu der Primärspulenplatte auszurichten und weitere Freiheitsgrade abzudecken und Abweichungen in mindestens einer weiteren translatorischen Achse und/oder um mindestens eine Rotationsachse zu minimieren.

Bevorzugt ist gemäß einer vorteilhaften Ausführungsform der Erfindung der Stellantrieb als Hubeinrichtung ausgebildet, mit dem die Sekundärspulenplatte zwischen einer von der Primärspulenplatte abgehobenen Stellung und einer auf die Primärspulenplatte abgesenkten Stellung in Richtung der vertikalen Achse bewegbar am Flurförderzeug angeordnet ist. Durch ein Absenken der Sekundärspulenplatte auf die Primärspulenplatte können auf einfache Weise translatorische Abweichungen der Sekundärspulenplatte zur Primärspulenplatte in vertikaler Richtung ausgeglichen und minimiert werden sowie rotatorische Abweichungen um die Querachse sowie rotatorische Abweichungen um die Längsachse ausgeglichen und minimiert werden und somit drei Freiheitsgrade abgedeckt werden.

Der Stellantrieb kann als Seilantrieb oder als Hebelantrieb oder als Zylinderantrieb ausgebildet sein. Ein Seilantrieb ermöglicht es, die Sekundärspulenplatte durch Schwerkraft auf die Primärspulenplatte abzusenken und mittels des Seilantriebs als Rückholmechanismus wieder von der Primärspulenplatte in das Flurförderzeug anzuheben und einzuholen. Mit einem Hebelantrieb oder einem Zylinderantrieb kann die Sekundärspulenplatte auf einfache Weise auf die Primärspulenplatte abgesenkt und von der Primärspulenplatte angehoben werden.

Um bei dem Antrieb der Sekundärspulenplatte in einer translatorischen Richtung durch den Stellantrieb Abweichungen der Sekundärspulenplatte zur Primärspulenplatte in weiteren Freiheitsgraden minimieren zu können, ist gemäß einer Weiterbildung der Erfindung zwischen dem Stellantrieb und der Sekundärspulenplatte eine Loslagerung ausgebildet, die mindestens die Abweichungen um die Rotationsachsen (β) und (γ) ausgleicht.

Bei einem Seilantrieb ist eine Loslagerung des Stellantriebs bereits durch ein flexibles Seil des Seilantriebs ermöglicht. Bei einem Hebelantrieb oder einem Zylinderantrieb kann eine Loslagerung auf einfache Weise durch eine Kugelkopflagerung erzielt werden, mit der die Hubeinrichtung an der Sekundärspulenplatte angelenkt ist.

Die Passungseinrichtung weist gemäß einer vorteilhaften Ausgestaltungsform der Erfindung eine Ausrichtung der Sekundärspulenplatte zur Primärspulenplatte durch die Schwerkraft der Sekundärspulenplatte auf. Beim Absenken der Sekundärspulenplatte auf die Primärspulenplatte können durch die Schwerkraft der Sekundärspulenplatte translatorische Abweichungen der Sekundärspulenplatte zur Primärspulenplatte in vertikaler Richtung sowie rotatorische Abweichungen um die Querachse sowie rotatorische Abweichungen um die Längsachse minimiert werden und somit drei Freiheitsgrade abgedeckt werden.

Die Passungseinrichtung weist gemäß einer vorteilhaften Ausgestaltungsform der Erfindung eine Ausrichtung der Sekundärspulenplatte zur Primärspulenplatte durch Formschluss auf. Mit einem Formschluss können die Abweichungen der Sekundärspulenplatte zur Primärspulenplatte in allen sechs Freiheitsgraden minimiert werden.

Für den Formschluss der Sekundärspulenplatte mit der Primärspulenplatte weist die Sekundärspulenplatte gemäß einer vorteilhaften Ausgestaltungsform der Erfindung mindestens eine Führungsschräge auf, die mit einer Gegenführungsschräge der Primärspulenplatte zusammenwirken kann.

Die Passungseinrichtung weist gemäß einer vorteilhaften Ausgestaltungsform der Erfindung eine Ausrichtung der Sekundärspulenplatte zur Primärspulenplatte durch eine Magneteinrichtung durchführen kann. Mit einer Magneteinrichtung können die Abweichungen in allen sechs Freiheitsgraden minimiert werden.

Gemäß einer vorteilhaften Weiterbildung der Erfindung ist das Flurförderzeug mit einer Positioniereinrichtung versehen, mit der die Sekundärspulenplatte in der von der Primärspulenplatte abgehobenen Stellung am Flurförderzeug positioniert ist. Dies ermöglicht es, die Anzahl der Aktuatoren des Stellantriebs zu verringern und nur einen einzigen Aktuator als Stellantrieb vorzusehen.

Die Positioniereinrichtung ist vorteilhafterweise als formschlüssige Positioniereinrichtung ausgebildet. Die Sekundärspulenplatte ist somit in der abgehobenen Stellung an dem Flurförderzeug formschlüssig positioniert.

Bevorzugt ist die Positioniereinrichtung als Aufnahmewanne an dem Flurförderzeug ausgebildet, in die Sekundärspulenplatte mittels des Stellantriebs in der abgehobenen Stellung positioniert wird.

Bevorzugt ist die Sekundärspulenplatte an einer Fahrzeugunterseite des Flurförderzeugs angeordnet.

Die Erfindung betrifft weiterhin ein System aus einem erfindungsgemäßen Flurförderzeug sowie einer Ladevorrichtung mit einer Primärspulenplatte zur Übertragung elektrischer Leistung auf induktivem Weg zu der Sekundärspulenplatte. Durch die bewegliche Anordnung der Sekundärspulenplatte am Flurförderzeug mit dem Ausrichtmechanismus wird es ermöglicht, zwischen der Sekundärspulenplatte und der Primärspulenplatte eine optimale geometrische Konfiguration mit minimalem Abstand und optimaler Ausrichtung zu erzielen, in der eine optimale induktive Leistungsübertragung mit geringen Streufeld, hohem Wirkungsgrad und hoher Nominalleistung erzielt wird.

Die Primärspulenplatte ist vorteilhafterweise feststehend angeordnet. Durch den Ausgleich von translatorischen und rotatorischen Abweichungen mit dem Ausrichtmechanismus an der fahrzeugseitigen Sekundärspulenplatte kann die infrastrukturseitige Primärspulenplatte kostengünstig feststehend angeordnet werden.

Die Primärspulenplatte ist bevorzugt an einer von dem Flurförderzeug überfahrbaren Bodenfläche angeordnet.

Die Primärspulenplatte kann hierbei auf der Fahrbahn angeordnet sein oder in der Fahrbahn versenkt angeordnet ist.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes System mit einem erfindungsgemäßen Flurförderzeug in einer Seitenansicht,
- Figur 2: ein Koordinatensystem der Figur 1 in einer vergrößerten Darstellung,
- Figur 3: eine nicht zur Erfindung gehörende Variante eines Flurförderzeugs,
- Figur 4: eine nicht zur Erfindung gehörende Variante eines Flurförderzeugs,
- Figur 5: eine nicht zur Erfindung gehörende Variante eines Flurförderzeugs,
- Figur 6: eine Ausführungsform eines erfindungsgemäßen Flurförderzeugs,
- Figur 7: eine weitere Ausführungsform eines erfindungsgemäßen Flurförderzeugs,
- Figur 8: eine Weiterbildung eines erfindungsgemäßen Flurförderzeugs und
- Figur 9: eine weitere Weiterbildung eines erfindungsgemäßen Flurförderzeugs.

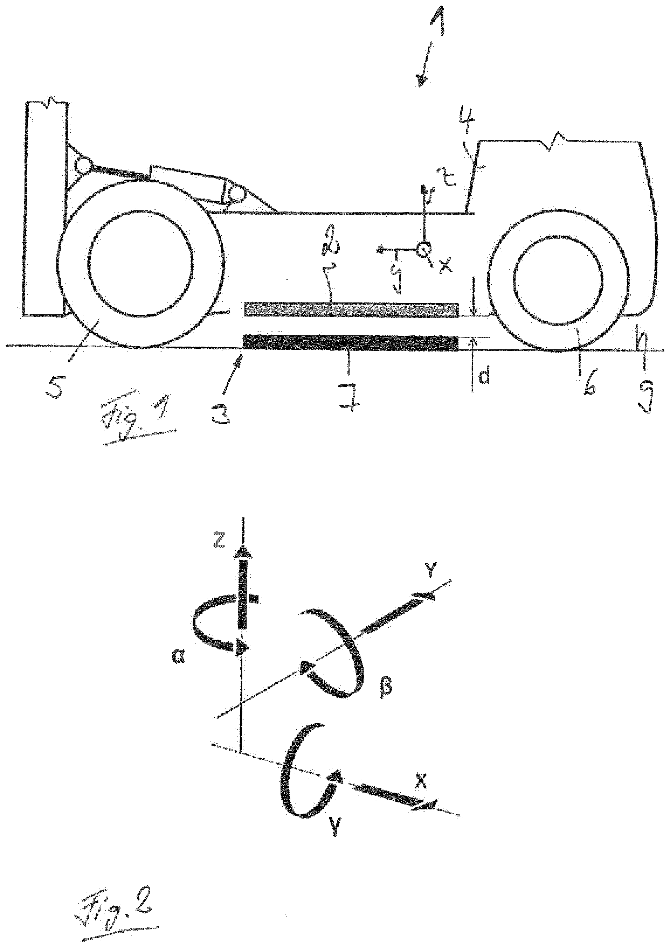

In der Figur 1 ist ein erfindungsgemäßes Flurförderzeug 1 mit einem eine Traktionsbatterie aufweisenden batterie-elektrischen Antriebssystem dargestellt. Das Flurförderzeug 1 ist mit einer Sekundärspulenplatte 2 einer induktiven Ladevorrichtung 3 zum Laden der Traktionsbatterie des Flurförderzeugs 1 versehen. Die Sekundärspulenplatte 2 ist im dargestellten Ausführungsbeispiel an der Fahrzeugunterseite eines Fahrzeugkörpers 4 des Flurförderzeugs 1 im Bereich des Fahrzeugbodens des Flurförderzeugs 1 zwischen einer Vorderachse 5 und einer Hinterachse 6 angeordnet.

In der Figur 1 ist weiterhin eine Primärspulenplatte 7 der induktiven Ladevorrichtung 3 dargestellt, mit der elektrische Leistung auf induktivem Weg zu der Sekundärspulenplatte 2 übertragen werden kann. Die Primärspulenplatte 7 ist auf einer von dem Flurförderzeug 1 überfahrbaren, als Fahrbahn ausgebildeten Bodenfläche 9 feststehend angeordnet. Alternativ kann die Primärspulenplatte 7 in der Fahrbahn 9 versenkt angeordnet sein. Die Sekundärspulenplatte 2 und die Primärspulenplatte 7 weisen bevorzugt eine quadratische oder rechteckförmige Gestalt mit im Wesentlichen identischen Abmessungen auf.

In der Figur 1 ist weiterhin ein Koordinatensystem mit drei senkrecht zueinander stehenden Achsen x, y, z dargestellt, wobei die x-Achse einer Querachse des Flurförderzeugs 1 entspricht, die y-Achse einer Längsachse des Flurförderzeugs 1 entspricht und die z-Achse einer vertikalen Achse entspricht. In der Figur 1 befindet sich die Sekundärspulenplatte 2 oberhalb der Primärspulenplatte 7 mit einem vertikalen Abstand in z-Richtung, der einem Luftspalt d entspricht. In der Figur 2 ist das Koordinatensystem der Figur 1 in vergrößerter Darstellung dargestellt, wobei neben denen drei Achsen x, y, z weiterhin drei Rotationsachsen α, β, γ dargestellt sind, wobei α einer Rotation um die z-Achse, β einer Rotation um die y-Achse und γ einer Rotation um die x-Achse entspricht.

Bei der in der Figur 1 dargestellten Anordnung der Sekundärspulenplatte 2 an der Fahrzeugunterseite am Fahrzeugboden des Flurförderzeugs 1 und der Primärspulenplatte 7 auf oder in der Fahrbahn 9 kann es durch ein ungenaues Positionieren des Flurförderzeugs 1 mit der Sekundärspulenplatte 2 über der Primärspulenplatte 7 zu translatorischen Abweichungen der Sekundärspulenplatte 2 zur Primärspulenplatte 9 in Richtung der Längsachse, d.h. in Richtung der y-Achse, und in Richtung der Querachse, d.h. in Richtung der x-Achse, der Platten 2, 9 kommen. Zudem kann durch ein ungenaues Positionieren des Flurförderzeugs 1 eine rotatorische Abweichung um die Rotationsachse α auftreten. Durch die zusätzliche Einwirkung einer Beladung des Flurförderzeugs 1, beispielsweise mit und ohne aufgenommene Last, und einer damit einhergehenden Einfederung des Flurförderzeugs 1 und den Verschleiß der Bereifung des Flurförderzeugs 1, der Bodenfreiheit und/oder der Bereifungsvariante des Flurförderzeugs 1 kann es zu einer translatorischen Abweichung in vertikaler z-Richtung sowie zu rotatorischen Abweichungen um die Rotationsachse β und zu rotatorischen Abweichungen um die Rotationsachse γ kommen. Die drei Achsen x, y, z und die drei Rotationsachsen α, β, γ stellen somit insgesamt sechs Freiheitsgrade auf, in denen jeweils Abweichungen der Sekundärspulenplatte 2 zu der Primärspulenplatte 7 beim Positionieren des Flurförderzeugs 1 an der Ladevorrichtung 3 auftreten können.

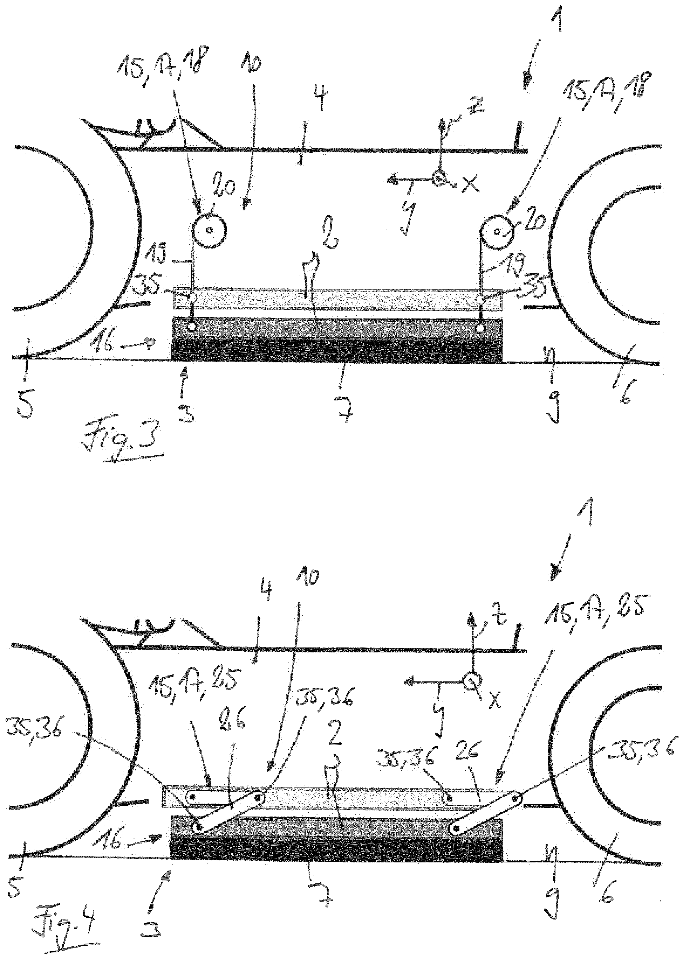

Wie in den Figuren 3 bis 9 dargestellt ist, ist die Sekundärspulenplatte 2 mit einem Ausrichtmechanismus 10 an dem Flurförderzeug 1 beweglich angeordnet. Der Ausrichtmechanismus 10 ermöglicht eine Ausrichtung der Sekundärspulenplatte 2 zu der Primärspulenplatte 7 der induktiven Ladevorrichtung 3 in mindestens einer translatorischen Achse x, y, z und/oder um zumindest eine Rotationsachse α, β, γ.

In den Figuren 3 bis 9 ermöglicht der Ausrichtmechanismus 10 translatorische Abweichungen der Sekundärspulenplatte 2 zu der Primärspulenplatte 7 der induktiven Ladevorrichtung 3 in Richtung der vertikalen Achse z und/oder in Richtung der Längsachse y und/oder in Richtung der Querachse x auszugleichen sowie rotatorische Abweichungen β der Sekundärspule 2 um die Längsachse y, rotatorische Abweichungen γ der Sekundärspule 2 um die Querachse x und/oder rotatorische Abweichungen α um die vertikale Achse z auszugleichen.

Der Ausrichtmechanismus 10 der Figuren 3 bis 9 weist jeweils einen Stellantrieb 15 auf, mit dem die Sekundärspulenplatte 2 zwischen einer von der Primärspulenplatte 7 abgehobenen Stellung und einer auf die Primärspulenplatte 7 abgesenkten Stellung in Richtung der vertikalen Achse z bewegbar am Flurförderzeug 2 angeordnet ist. Der Ausrichtmechanismus 10 weist weiterhin eine Passungseinrichtung 16 auf, die eine translatorische Abweichung der Sekundärspulenplatte 2 zu der Primärspulenplatte 7 der induktiven Ladevorrichtung 3 in Richtung mindestens einer weiteren Achse x, y und/oder eine rotatorische Abweichung der Sekundärspulenplatte 2 um mindestens eine Rotationsachse α, β, γ ausgleicht.

In den Figuren 3 bis 9 ist die Sekundärspulenplatte 2 jeweils in der von der Primärspulenplatte 7 abgehobenen Stellung und in der auf die Primärspulenplatte 7 abgesenkten Stellung dargestellt.

In den Figuren 3 bis 9 ist der Stellantrieb 15 jeweils als Hubeinrichtung 17 ausgebildet, mit dem die Sekundärspulenplatte 2 zwischen der von der Sekundärspulenplatte 7 abgehobenen Stellung und der auf die Primärspulenplatte 7 abgesenkten Stellung in Richtung der vertikalen Achse z bewegbar am Flurförderzeug 1 angeordnet ist.

In der Figur 3 ist die Hubeinrichtung 17 als Seilantrieb 18 ausgebildet, der mindestens ein Seil 19 aufweist, das mittels einer Winde 20 aufwickelbar ist. Die Absenkbewegung der Sekundärspulenplatte 2 erfolgt hierbei durch die Schwerkraft und das Anheben der Sekundärspulenplatte 2 erfolgt mit dem Seil 19 und der Winde 20, die somit einen Rückholmechanismus zum Anheben der Sekundärspulenplatte 2 bilden. In der Figur 3 sind mehrere Seile 19 und Winden 20 vorgesehen, beispielsweise jeweils ein Seil 19 mit einer Winde 20 an jedem Eckbereich der Sekundärspulenplatte 2.

In der Figur 3 weist die Passungseinrichtung 16 eine Ausrichtung der in der abgesenkten Stellung befindlichen Sekundärspulenplatte 2 zur Primärspulenplatte 7 durch Kraftschuss mittels der Schwerkraft der Sekundärspulenplatte 2 auf. Durch das Absenken der Sekundärspulenplatte 2 auf die Primärspulenplatte 7 können durch die Schwerkraft translatorische Abweichungen der Sekundärspulenplatte 2 zur Primärspulenplatte 7 in vertikaler Richtung z sowie rotatorische Abweichungen der Sekundärspulenplatte 2 zur Primärspulenplatte 7 um die Rotationsachse β sowie um die Rotationsachse γ ausgeglichen werden. Die Passungseinrichtung 16 ermöglicht somit einen Ausgleich von Abweichungen der Sekundärspulenplatte 2 zur Primärspulenplatte 7 in drei Freiheitsgraden.

In der Figur 4 ist die Hubeinrichtung 17 als Hebelantrieb 25 mit einem schwenkbarer Hebel 26 zum Anheben und Absenken der Sekundärspulenplatte 2 ausgebildet. In der Figur 4 sind mehrere Hebelantriebe 25 vorgesehen, beispielsweise jeweils ein Hebelantrieb 25 mit einem schwenkbaren Hebel 26 an jedem Eckbereich der Sekundärspulenplatte 2.

In der Figur 4 weist die Passungseinrichtung 16 eine Ausrichtung der in der abgesenkten Stellung befindlichen Sekundärspulenplatte 2 zur Primärspulenplatte 7 durch Kraftschuss mittels der Schwerkraft der Sekundärspulenplatte 2 auf. Durch das Absenken der Sekundärspulenplatte 2 auf die Primärspulenplatte 7 können durch die Schwerkraft translatorische Abweichungen der Sekundärspulenplatte 2 zur Primärspulenplatte 7 in vertikaler Richtung z sowie rotatorische Abweichungen der Sekundärspulenplatte 2 zur Primärspulenplatte 7 um die Rotationsachse β sowie um die Rotationsachse γ ausgeglichen werden. Die Passungseinrichtung 16 ermöglicht somit einen Ausgleich von Abweichungen der Sekundärspulenplatte 2 zur Primärspulenplatte 7 in drei Freiheitsgraden.

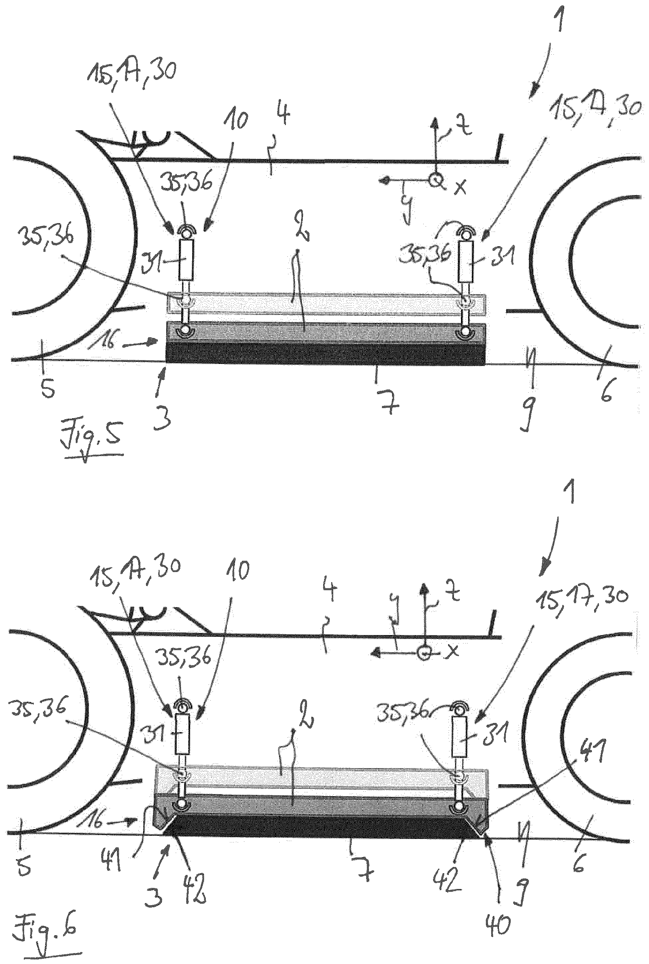

In der Figur 5 ist die Hubeinrichtung 17 als Zylinderantrieb 30 ausgebildet, der einen Zylinder 31 zum Anheben und Absenken der Sekundärspulenplatte 2 umfasst. Der Zylinder 1 ist an einer Seite mit dem Fahrzeugkörper 34 verbunden und an einer zweiten Seite mit der Sekundärspulenplatte 2. In der Figur 5 sind mehrere Zylinderantriebe 30 vorgesehen, beispielsweise jeweils ein Zylinderantrieb 20 an jedem Eckbereich der Sekundärspulenplatte 2.

In der Figur 5 weist die Passungseinrichtung 16 eine Ausrichtung der in der abgesenkten Stellung befindlichen Sekundärspulenplatte 2 zur Primärspulenplatte 7 durch Kraftschuss mittels der Schwerkraft der Sekundärspulenplatte 2 auf. Durch das Absenken der Sekundärspulenplatte 2 auf die Primärspulenplatte 7 können durch die Schwerkraft translatorische Abweichungen der Sekundärspulenplatte 2 zur Primärspulenplatte 7 in vertikaler Richtung z sowie rotatorische Abweichungen der Sekundärspulenplatte 2 zur Primärspulenplatte 7 um die Rotationsachse β sowie um die Rotationsachse γ ausgeglichen werden. Die Passungseinrichtung 16 ermöglicht somit einen Ausgleich von Abweichungen der Sekundärspulenplatte 2 zur Primärspulenplatte 7 in drei Freiheitsgraden.

In der Figur 6 weist die Passungseinrichtung 16 eine Ausrichtung der in der abgesenkten Stellung befindlichen Sekundärspulenplatte 2 zur Primärspulenplatte 7 durch Kraftschluss und zusätzlich durch Formschluss 40 auf.

Der Formschluss 40 zwischen der abgesenkten Sekundärspulenplatte 2 und der Primärspulenplatte 7 wird mit mindestens einer an der Sekundärspulenplatte 2 angeordneten Führungsschräge 41 erzielt, die in der abgesenkten Stellung der Sekundärspulenplatte 2 mit einer an der Primärspulenplatte 7 angeordneten Gegenführungsschräge 42 zusammenwirkt. Bevorzugt sind an mehreren Umfangsflächen der Sekundärspulenplatte 2 und der Primärspulenplatte 7 entsprechende Führungsschrägen 41 und Gegenführungsschräge 42 angeordnet bzw. die Umfangsflächen der Sekundärspulenplatte 2 und der Primärspulenplatte 7 an allen vier Seiten als Führungsschrägen 41 bzw. Gegenführungsschräge 42 ausgebildet.

In der Figur 6 ist die Hubeinrichtung 17 als Zylinderantrieb 30 gemäß der Figur 5 ausgebildet. Es versteht sich, dass in der Figur 6 die Hubeinrichtung 17 alternativ gemäß der Figur 3 als Seilantrieb 18 oder gemäß der Figur 4 als Hebelantrieb 25 ausgebildet sein kann.

In der Figur 6 weist die Passungseinrichtung 16 eine Ausrichtung der in der abgesenkten Stellung befindlichen Sekundärspulenplatte 2 zur Primärspulenplatte 7 durch Kraftschuss mittels der Schwerkraft der Sekundärspulenplatte 2 auf, wobei durch das Absenken der Sekundärspulenplatte 2 auf die Primärspulenplatte 7 durch die Schwerkraft translatorische Abweichungen der Sekundärspulenplatte 2 zur Primärspulenplatte 7 in vertikaler Richtung z sowie rotatorische Abweichungen der Sekundärspulenplatte 2 zur Primärspulenplatte 7 um die Rotationsachse β sowie um die Rotationsachse γ ausgeglichen werden. Die Passungseinrichtung 16 ermöglicht es mit dem Formschluss 40 weiterhin, translatorische Abweichungen der Sekundärspulenplatte 2 zur Primärspulenplatte 7 in x-Richtung und in y-Richtung auszugleichen sowie rotatorische Abweichungen der Sekundärspulenplatte 2 zur Primärspulenplatte 7 um die Rotationsachse α auszugleichen. Die Passungseinrichtung 16 der Figur 6 ermöglicht somit einen Ausgleich von Abweichungen der Sekundärspulenplatte 2 zur Primärspulenplatte 7 in allen sechs Freiheitsgraden.

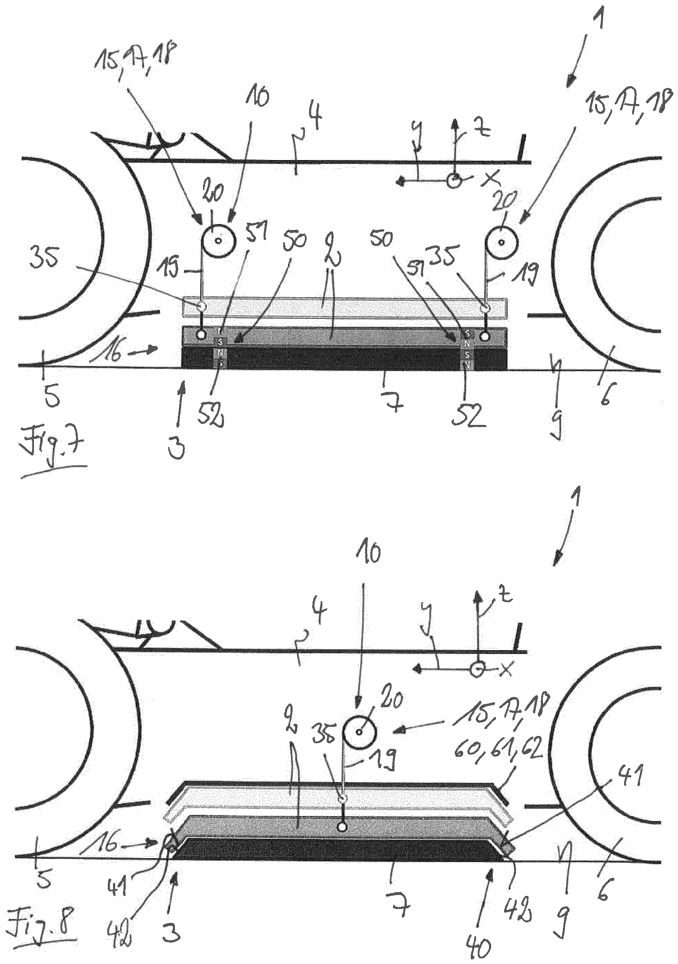

In der Figur 7 weist die Passungseinrichtung 16 eine Ausrichtung der der in der abgesenkten Stellung befindlichen Sekundärspulenplatte 2 zur Primärspulenplatte 7 durch Kraftschluss und zusätzlich durch eine Magneteinrichtung 50 auf, die bevorzugt ein DC-Magnetfeld erzeugt.

Die Magneteinrichtung 50 besteht aus mindestens einem an der Sekundärspulenplatte 2 angeordneten Magnet 51, der in der abgesenkten Stellung der Sekundärspulenplatte 2 mit einem an der Primärspulenplatte 7 angeordneten Magnet 52 zusammenwirkt. Die Magnete 51, 52 können als Dauermagnete oder Elektromagnete ausgebildet sein. Das DC-Magnetfeld der Magneteinrichtung 50 kann von den bereits vorhandenen AC-Spulen der Sekundärspulenplatte 2 und der Primärspulenplatte 7 erzeugt werden oder alternativ von zusätzlichen Spulen der Sekundärspulenplatte 2 und der Primärspulenplatte 7 erzeugt werden. Die Verwendung von Elektromagneten zur Erzeugung des DC-Magnetfeldes ist besonders vorteilhaft, da hierdurch kein ferromagnetisches Material an der Sekundärspulenplatte 2 und der Primärspulenplatte 7 vorzusehen ist, welches zu Verlusten in dem AC-Magnetfeld bei der induktiven Leistungsübertragung führt.

In der Figur 7 ist die Hubeinrichtung 17 als Seilantrieb 18 gemäß der Figur 3 ausgebildet. Es versteht sich, dass in der Figur 7 die Hubeinrichtung 17 alternativ gemäß der Figur 4 als Hebelantrieb 25 oder gemäß der Figur 5 als Zylinderantrieb 30 ausgebildet sein kann.

In der Figur 7 weist die Passungseinrichtung 16 eine Ausrichtung der in der abgesenkten Stellung befindlichen Sekundärspulenplatte 2 zur Primärspulenplatte 7 durch Kraftschuss mittels der Schwerkraft der Sekundärspulenplatte 2 auf, wobei durch das Absenken der Sekundärspulenplatte 2 auf die Primärspulenplatte 7 durch die Schwerkraft translatorische Abweichungen der Sekundärspulenplatte 2 zur Primärspulenplatte 7 in vertikaler Richtung z sowie rotatorische Abweichungen der Sekundärspulenplatte 2 zur Primärspulenplatte 7 um die Rotationsachse β sowie um die Rotationsachse γ ausgeglichen werden. Die Passungseinrichtung 16 ermöglicht es mit der Magneteinrichtung 50 weiterhin, translatorische Abweichungen der Sekundärspulenplatte 2 zur Primärspulenplatte 7 in x-Richtung und in y-Richtung auszugleichen sowie rotatorische Abweichungen der Sekundärspulenplatte 2 zur Primärspulenplatte 7 um die Rotationsachse α auszugleichen. Die Passungseinrichtung 16 der Figur 7 ermöglicht somit einen Ausgleich von Abweichungen der Sekundärspulenplatte 2 zur Primärspulenplatte 7 in allen sechs Freiheitsgraden.

In der Figur 8 ist das Flurförderzeug 1 mit einer Positioniereinrichtung 60 versehen, mit der die Sekundärspulenplatte 2 in der von der Primärspulenplatte 7 abgehobenen Stellung am Flurförderzeug 1 positioniert ist. Die Positioniereinrichtung 60 ist als formschlüssige Positioniereinrichtung 61 ausgebildet, die als Aufnahmewanne 62 an dem Flurförderzeug 1 ausgebildet ist, in die die Sekundärspulenplatte 2 angehoben wird. Dies ermöglicht es, die Anzahl der Stellantriebe 15 zu verringern und nur einen einzigen Stellantrieb 15 vorzusehen. Das Anheben der Sekundärspulenplatte 2 in die am Flurförderzeug 1 ausgebildete formschlüssige Positioniereinrichtung 61, ermöglicht weiterhin einen Schutz der angehobenen Sekundärspulenplatte 2 gegen äußere Einwirkungen.

In der Figur 8 ist der als Hubeinrichtung 17 ausgebildete Stellantrieb 15 als Seilantrieb 18 gemäß der Figur 3 ausgebildet. Das Seil 19 ist bevorzugt im Bereich des Schwerpunkts der Sekundärspulenplatte 2 an dieser befestigt. Der Seilantrieb 18 bildet einen Rückholmechanismus zum Anhaben der Sekundärspulenplatte 2 in die Aufnahmewanne 62 am Flurförderzeug1.

In der Figur 8 weist die Passungseinrichtung 16 eine Ausrichtung der Sekundärspulenplatte 2 zur Primärspulenplatte 7 in der abgesenkten Stellung durch Kraftschluss mittels der Schwerkraft und zusätzlich durch Formschluss 40 gemäß der Figur 6 auf.

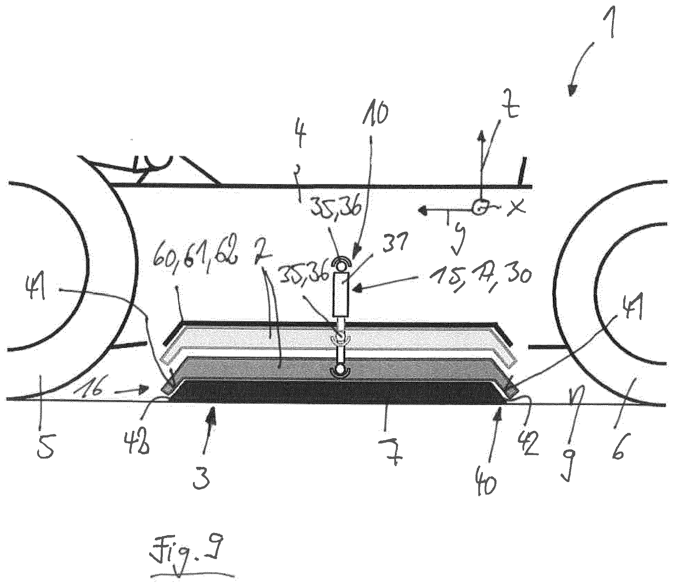

In der Figur 9 ist ein Flurförderzeug 1 mit einer Positioniereinrichtung 60 gemäß der Figur 8 versehen, wobei die Hubeinrichtung 17 als Zylinderantrieb 30 gemäß den Figuren 5, 6 mit einem einzelnen Zylinder 31 ausgebildet ist. Der Zylinder 31 ist bevorzugt im Bereich des Schwerpunkts der Sekundärspulenplatte 2 an dieser befestigt.

In der Figur 9 weist die Passungseinrichtung 16 eine Ausrichtung der Sekundärspulenplatte 2 zur Primärspulenplatte 7 in der abgesenkten Stellung durch Kraftschluss mittels der Schwerkraft und zusätzlich durch Formschluss 40 gemäß der Figur 6 auf.

Um in den Figuren 3 bis 9, in denen mit der Hubeinrichtung 17 die Sekundärspulenplatte 2 in vertikaler Richtung z angehoben und abgesenkt wird und die Abweichungen in z-Richtung ausgeglichen werden, weitere Abweichungen, in den dargestellten Ausfühungsbeispielen der Figuren 3 bis 5 die Abweichungen um die Rotationsachsen β und γ ausgleichen zu können und in den Figuren 6 bis 9 zusätzlich die Abweichungen in x-Richtung und in y-Richtung sowie um die Rotationsachse α ausgleichen zu können, ist zwischen der Hubeinrichtung 17 und der Sekundärspulenplatte 2 eine Loslagerung 35 ausgebildet. In der Figuren 3, 7 und 8 wird dies durch die flexiblen Seile 19 des Seilantriebs 18 erzielt. In der Figur 4 kann hierzu der schwenkbare Hebel 26 mittels einer Kugelkopflagerung 36 an der Sekundärspulenplatte 2 und an dem Fahrzeugkörper 4 angelenkt sein. In den Figuren 5, 6 und 9 kann hierzu der Zylinder 31 mittels einer Kugelkopflagerung 36 an der Sekundärspulenplatte 2 und an dem Fahrzeugkörper 4 angelenkt sein.

Die Erfindung ist nicht auf die dargestellten Ausführungsbeispiele beschränkt.

Eine Magneteinrichtung 50 gemäß der Figur 7 kann auch bei einer Passungseinrichtung 16 durch Formschluss 40 gemäß den Figuren 6, 8 und 9 zusätzlich vorgesehen werden, um durch das DC-Magnetfeld die Positionierung und Ausrichtung der Sekundärspulenplatte 2 in der abgesenkten Stellung zur Primärspuleneinheit 7 durch den Kraftschluss und den Formschluss 40 zu unterstützen.

Die Bewegung der Sekundärspulenplatte 2 zwischen der von der Primärspulenplatte 7 abgehobenen Stellung und der auf die Primärspulenplatte 7 abgesenkten Stellung durch den Stellantrieb 15 kann anstelle einer Bewegung in z-Richtung der Figuren 3 bis 9 als eine Bewegung in x-Richtung oder y-Richtung ausgeführt sein, solange der erfindungsemäße Ausgleich von translatorischen Abweichungen der Sekundärspulenplatte zur Primärspulenplatte entlang der vertikalen Achse und von rotatorischen Abweichungen der Sekundärspulenplatte zur Primärspulenplatte um alle drei räumlichen Achsen des Flurförderzeugs gewährleistet bleibt. Die Sekundärspulenplatte 2 kann hierbei alternativ zur Anordnung an der Fahrzeugunterseite der Figuren 1 bis 9 auch seitlich am Flurförderzeug 1 sein. Der Kraftschluss der Passungseinrichtung 16 kann hierbei anstelle der Schwerkraft durch die Federkraft von Federeinrichtungen erzeugt werden.

## Patentansprüche

1. Flurförderzeug (1) mit einem eine Traktionsbatterie aufweisenden batterie-elektrischen Antriebssystem und mit einer Sekundärspulenplatte (2) einer induktiven Ladevorrichtung (3) zum Laden der Traktionsbatterie des Flurförderzeugs (1), **dadurch gekennzeichnet, dass** die Sekundärspulenplatte (2) mit einem Ausrichtmechanismus (10) an dem Flurförderzeug (1) beweglich angeordnet ist, der ausgeführt ist, das Streufeld der induktiven Ladevorrichtung zu minimieren, wobei der Ausrichtmechanismus (10) eine Ausrichtung der Sekundärspulenplatte (2) zu einer Primärspulenplatte (7) der induktiven Ladevorrichtung (3) in mindestens einer translatorischen Achse (x; y; z) und um zumindest eine Rotationsachse (α; β; γ) ermöglicht, wobei der Ausrichtmechanismus (10) translatorische Abweichungen (z) der Sekundärspulenplatte (2) zu der Primärspulenplatte (7) der induktiven Ladevorrichtung (3) in Richtung einer vertikalen Achse (z) ausgleicht und rotatorische Abweichungen (α, β, γ) der Sekundärspulenplatte (2) um eine Längsachse (y) des Flurförderzeugs (1), um eine Querachse (x) des Flurförderzeugs (1) und um die vertikale Achse (z) ausgleicht.

2. Flurförderzeug nach Anspruch 1, **dadurch gekennzeichnet, dass** der Ausrichtmechanismus (10) translatorische Abweichungen der Sekundärspulenplatte (2) zu der Primärspulenplatte (7) der induktiven Ladevorrichtung (3) in Richtung der Längsachse (y) und/oder in Richtung der Querachse (x) ausgleicht.

3. Flurförderzeug nach Anspruch 1 oder 2, **dadurch gekennzeichnet, dass** der Ausrichtmechanismus (10) einen Stellantrieb (15) aufweist, mit dem die Sekundärspulenplatte (2) zwischen einer von der Primärspulenplatte (7) abgehobenen Stellung und einer auf die Primärspulenplatte (7) abgesenkten Stellung in einer translatorischen Achse (z) bewegbar am Flurförderzeug (1) angeordnet ist, und eine Passungseinrichtung (16) aufweist, die eine translatorische Abweichung der Sekundärspulenplatte (2) zu der Primärspulenplatte (7) der induktiven Ladevorrichtung (3) in Richtung mindestens einer weiteren Achse (x; y) und/oder eine rotatorische Abweichung (α, β, γ) der Sekundärspulenplatte (7) um mindestens eine Achse (x; y; z) ausgleicht.

4. Flurförderzeug nach Anspruch 3, **dadurch gekennzeichnet, dass** der Stellantrieb (15) als Hubeinrichtung (17) ausgebildet ist, mit dem die Sekundärspulenplatte (2) zwischen einer von der Primärspulenplatte (7) abgehobenen Stellung und einer auf die Primärspulenplatte (7) abgesenkten Stellung in Richtung der vertikalen Achse (z) bewegbar am Flurförderzeug (1) angeordnet ist.

5. Flurförderzeug nach Anspruch 3 oder 4, **dadurch gekennzeichnet, dass** der Stellantrieb (15) als Seilantrieb (18) oder als Hebelantrieb (25) oder als Zylinderantrieb (30) ausgebildet ist.

6. Flurförderzeug nach einem der Ansprüche 3 bis 5, **dadurch gekennzeichnet, dass** zwischen dem Stellantrieb (15) und der Sekundärspulenplatte (2) eine Loslagerung (35) ausgebildet ist, die mindestens die rotatorischen Abweichungen (β,γ) um die Längsachse (y) und um die Querachse (x) des Flurförderzeuges ausgleicht.

7. Flurförderzeug nach Anspruch 6, **dadurch gekennzeichnet, dass** die Loslagerung (35) als Kugelkopflagerung (36) ausgebildet ist.

8. Flurförderzeug nach einem der Ansprüche 3 bis 7, **dadurch gekennzeichnet, dass** die Passungseinrichtung (16) eine Ausrichtung der Sekundärspulenplatte (2) zur Primärspulenplatte (7) durch die Schwerkraft der Sekundärspulenplatte (2) aufweist.

9. Flurförderzeug nach einem der Ansprüche 3 bis 8, **dadurch gekennzeichnet, dass** die Passungseinrichtung (16) eine Ausrichtung der Sekundärspulenplatte (2) zur Primärspulenplatte (7) durch Formschluss (40) aufweist.

10. Flurförderzeug nach Anspruch 9, **dadurch gekennzeichnet, dass** die Sekundärspulenplatte (2) mindestens eine Führungsschräge (41) aufweist, die mit einer Gegenführungsschräge (42) der Primärspulenplatte (7) zusammenwirken kann.

11. Flurförderzeug nach einem der Ansprüche 3 bis 10, **dadurch gekennzeichnet, dass** die Passungseinrichtung (16) durch eine Magneteinrichtung (50) dazu eingerichtet ist, eine Ausrichtung der Sekundärspulenplatte (2) zur Primärspulenplatte (7) durchzuführen.

12. Flurförderzeug nach einem der Ansprüche 3 bis 11, **dadurch gekennzeichnet, dass** das Flurförderzeug (1) mit einer Positioniereinrichtung (60) versehen ist, mit der die Sekundärspulenplatte (2) in der von der Primärspulenplatte (7) abgehobenen Stellung am Flurförderzeug (1) positioniert ist.

13. Flurförderzeug nach Anspruch 12, **dadurch gekennzeichnet, dass** die Positioniereinrichtung (60) als formschlüssige Positioniereinrichtung (61) ausgebildet ist.

14. Flurförderzeug nach Anspruch 12 oder 13, **dadurch gekennzeichnet, dass** die Positioniereinrichtung (60) als Aufnahmewanne (62) an dem Flurförderzeug (1) ausgebildet ist.

15. Flurförderzeug nach einem der Ansprüche 1 bis 14, **dadurch gekennzeichnet, dass** die Sekundärspulenplatte (2) an einer Fahrzeugunterseite des Flurförderzeugs (1) angeordnet ist.

16. System aus einem Flurförderzeug (1) nach einem der vorhergehenden Ansprüche sowie einer Ladevorrichtung (1) mit einer Primärspulenplatte (7) zur Übertragung elektrischer Leistung auf induktivem Weg zu der Sekundärspulenplatte (2).

17. System nach Anspruch 16, **dadurch gekennzeichnet, dass** die Primärspulenplatte (7) feststehend angeordnet ist.

18. System nach Anspruch 16 oder 17, **dadurch gekennzeichnet, dass** die Primärspulenplatte (7) an einer von dem Flurförderzeug (1) überfahrbaren Bodenfläche (9) angeordnet ist.

19. System nach Anspruch 18, **dadurch gekennzeichnet, dass** die Primärspulenplatte (7) auf der Fahrbahn (9) angeordnet ist oder in der Fahrbahn (9) versenkt angeordnet ist.

## Claims

1. Industrial truck (1) with a battery-electrical drive system having a traction battery and with a secondary coil plate (2) of an inductive charging device (3) for charging the traction battery of the industrial truck (1), **characterized in that** the secondary coil plate (2) is movably arranged on the industrial truck (1) by an aligning mechanism (10) which is designed to minimize the stray field of the inductive charging device, wherein the aligning mechanism (10) allows an alignment of the secondary coil plate (2) in relation to a primary coil plate (7) of the inductive charging device (3) in at least one translational axis (x; y; z) and about at least one rotational axis (α; β; y), wherein the aligning mechanism (10) compensates for translational deviations (z) of the secondary coil plate (2) in relation to the primary coil plate (7) of the inductive charging device (3) in the direction of a vertical axis (z) and compensates for rotational deviations (α; β; y) of the secondary coil plate (2) about a longitudinal axis (y) of the industrial truck (1), about a transverse axis (x) of the industrial truck (1) and about the vertical axis (z) .

2. Industrial truck according to Claim 1, **characterized in that** the aligning mechanism (10) compensates for translational deviations of the secondary coil plate (2) in relation to the primary coil plate (7) of the inductive charging device (3) in the direction of the longitudinal axis (y) and/or in the direction of the transverse axis (x) .

3. Industrial truck according to Claim 1 or 2, **characterized in that** the aligning mechanism (10) has an actuating drive (15), by which the secondary coil plate (2) is arranged movably on the industrial truck (1) between a position lifted off from the primary coil plate (7) and a position lowered onto the primary coil plate (7) in a translational axis (z), and has a fitting device (16), which compensates for a translational deviation of the secondary coil plate (2) in relation to the primary coil plate (7) of the inductive charging device (3) in the direction of at least one further axis (x; y) and/or a rotational deviation (α; β; y) of the secondary coil plate (7) about at least one axis (x; y; z).

4. Industrial truck according to Claim 3, **characterized in that** the actuating drive (15) is configured as a lifting device (17), by which the secondary coil plate (2) is arranged movably on the industrial truck (1) between a position lifted off from the primary coil plate (7) and a position lowered onto the primary coil plate (7) in the direction of the vertical axis (z).

5. Industrial truck according to Claim 3 or 4, **characterized in that** the actuating drive (15) is configured as a cable drive (18) or as a lever drive (25) or as a cylinder drive (30).

6. Industrial truck according to one of Claims 3 to 5, **characterized in that** formed between the actuating drive (15) and the secondary coil plate (2) is a floating bearing (35), which compensates for at least the rotational deviations (β; y) about the longitudinal axis (y) and about the transverse axis (x) of the industrial truck.

7. Industrial truck according to Claim 6, **characterized in that** the floating bearing (35) is configured as a ball head bearing (36).

8. Industrial truck according to one of Claims 3 to 7, **characterized in that** the fitting device (16) comprises an alignment of the secondary coil plate (2) in relation to the primary coil plate (7) by the gravitational force of the secondary coil plate (2).

9. Industrial truck according to one of Claims 3 to 8, **characterized in that** the fitting device (16) comprises an alignment of the secondary coil plate (2) in relation to the primary coil plate (7) by interlocking engagement (40) .

10. Industrial truck according to Claim 9, **characterized in that** the secondary coil plate (2) has at least one guiding bevel (41), which can interact with a counter guiding bevel (42) of the primary coil plate (7).

11. Industrial truck according to one of Claims 3 to 10, **characterized in that** the fitting device (16) is set up to carry out an alignment of the secondary coil plate (2) in relation to the primary coil plate (7) by a magnetic device (50).

12. Industrial truck according to one of Claims 3 to 11, **characterized in that** the industrial truck (1) is provided with a positioning device (60), by which the secondary coil plate (2) is positioned on the industrial truck (1) in the position lifted off from the primary coil plate (7).

13. Industrial truck according to Claim 12, **characterized in that** the positioning device (60) is configured as an interlocking positioning device (61).

14. Industrial truck according to Claim 12 or 13, **characterized in that** the positioning device (60) is configured as a receiving recess (62) on the industrial truck (1).

15. Industrial truck according to one of Claims 1 to 14, **characterized in that** the secondary coil plate (2) is arranged on a vehicle underside of the industrial truck (1) .

16. System comprising an industrial truck (1) according to one of the preceding claims and also a charging device (1) with a primary coil plate (7) for the transmission of electrical power by inductive means to the secondary coil plate (2).

17. System according to Claim 16, **characterized in that** the primary coil plate (7) is stationarily arranged.

18. System according to Claim 16 or 17, **characterized in that** the primary coil plate (7) is arranged on a floor area (9) that can be travelled over by the industrial truck (1).

19. System according to Claim 18, **characterized in that** the primary coil plate (7) is arranged on the roadway (9) or is arranged sunken in the roadway (9).

## Revendications

1. Convoyeur au sol (1) comprenant un système d'entraînement électrique à batterie, qui comporte une batterie de traction, et une plaque de bobine secondaire (2) d'un dispositif de charge par induction (3) destinée à charger la batterie de traction du convoyeur au sol (1), **caractérisé en ce que** la plaque de bobine secondaire (2) est disposée de manière mobile à l'aide d'un mécanisme d'orientation (10) sur le convoyeur au sol (1) qui est conçu pour minimiser le champ parasite du dispositif de charge par induction, le mécanisme d'orientation (10) permettant d'orienter la plaque de bobine secondaire (2) par rapport à une plaque de bobine primaire (7) du dispositif de charge par induction (3) suivant au moins un axe de translation (x ; y ; z) et autour d'au moins un axe de rotation (α ; β ; γ), le mécanisme d'orientation (10) compense des écarts de translation (z) de la plaque de bobine secondaire (2) par rapport à la plaque de bobine primaire (7) du dispositif de charge par induction (3) dans la direction d'un axe vertical (z) et des écarts de rotation (α ; β ; γ) de la plaque de bobine secondaire (2) autour d'un axe longitudinal (y) du convoyeur au sol (1) autour d'un axe transversal (x) du convoyeur au sol (1) et autour de l'axe vertical (z).

2. Convoyeur au sol selon la revendication 1, **caractérisé en ce que** le mécanisme d'orientation (10) compense des écarts de translation de la plaque de bobine secondaire (2) par rapport à la plaque de bobine primaire (7) du dispositif de charge par induction (3) en direction de l'axe longitudinal (y) et/ou en direction de l'axe transversal (x).

3. Convoyeur au sol selon la revendication 1 ou 2, **caractérisé en ce que** le mécanisme d'orientation (10) comporte un actionneur (15) permettant de disposer la plaque de bobine secondaire (2) sur le convoyeur au sol (1) de manière mobile suivant un axe de translation (z) entre une position soulevée de la plaque de bobine primaire (7) et une position abaissée sur la plaque de bobine primaire (7), et comporte un dispositif d'ajustement (16) qui compense un écart en translation de la plaque de bobine secondaire (2) par rapport à la plaque de bobine primaire (7) du dispositif de charge par induction (3) en direction d'au moins un autre axe (x ; y) et/ou un écart de rotation (α ; β ; γ) de la plaque de bobine secondaire (7) autour d'au moins un axe (x; y; z).

4. Convoyeur au sol selon la revendication 3, **caractérisé en ce que** l'actionneur (15) est conçu comme un dispositif de levage (17) permettant de disposer la plaque de bobine secondaire (2) de manière mobile sur le convoyeur au sol (1) entre une position soulevée de la plaque de bobine primaire (7) et une position abaissée sur la plaque de bobine primaire (7) suivant la direction de l'axe vertical (z).

5. Convoyeur au sol selon la revendication 3 ou 4, **caractérisé en ce que** l'actionneur (15) est réalisé sous la forme d'un entraînement à câble (18) ou sous la forme d'un entraînement à levier (25) ou sous la forme d'un entraînement à vérin (30).

6. Convoyeur au sol selon l'une des revendications 3 à 5, **caractérisé en ce qu'**un palier libre (35) est formé entre l'actionneur (15) et la plaque de bobine secondaire (2), lequel palier libre compense au moins les écarts de rotation (β ; γ) autour de l'axe longitudinal (y) et de l'axe transversal (x) du convoyeur au sol.

7. Convoyeur au sol selon la revendication 6, **caractérisé en ce que** le palier libre (35) est conçu sous la forme d'un palier à rotule (36).

8. Convoyeur au sol selon l'une des revendications 3 à 7, **caractérisé en ce que** le dispositif d'ajustement (16) présente une orientation de la plaque de bobine secondaire (2) par rapport à la plaque de bobine primaire (7) en raison de la gravité de la plaque de bobine secondaire (2).

9. Convoyeur au sol selon l'une des revendications 3 à 8, **caractérisé en ce que** le dispositif d'ajustement (16) présente une orientation de la plaque de bobine secondaire (2) par rapport à la plaque de bobine primaire (7) en raison d'une liaison par complémentarité de formes (40).

10. Convoyeur au sol selon la revendication 9, **caractérisé en ce que** la plaque de bobine secondaire (2) comporte au moins un biseau de guidage (41) qui peut coopérer avec un biseau de guidage homologue (42) de la plaque de bobine primaire (7).

11. Convoyeur au sol selon l'une des revendications 3 à 10, **caractérisé en ce que** le dispositif d'ajustement (16) est conçu par le biais d'un dispositif magnétique (50) pour orienter la plaque de bobine secondaire (2) par rapport à la plaque de bobine primaire (7).

12. Convoyeur au sol selon l'une des revendications 3 à 11, **caractérisé en ce que** le convoyeur au sol (1) est pourvu d'un dispositif de positionnement (60) permettant de positionner la plaque de bobine secondaire (2) sur le convoyeur au sol (1) dans la position relevée de la plaque de bobine primaire (7).

13. Convoyeur au sol selon la revendication 12, **caractérisé en ce que** le dispositif de positionnement (60) est conçu sous la forme d'un dispositif de positionnement par complémentarité de formes (61).

14. Convoyeur au sol selon la revendication 12 ou 13, **caractérisé en ce que** le dispositif de positionnement (60) est conçu sous la forme d'une cuvette de réception (62) sur le convoyeur au sol (1).

15. Convoyeur au sol selon l'une des revendications 1 à 14, **caractérisé en ce que** la plaque de bobine secondaire (2) est disposée sur le côté inférieur du convoyeur au sol (1).

16. Système formé d'un convoyeur au sol (1) selon l'une des revendications précédentes et d'un dispositif de charge (1) qui comprend une plaque de bobine primaire (7) destinée à transmettre de la puissance électrique par induction à la plaque de bobine secondaire (2).

17. Système selon la revendication 16, **caractérisé en ce que** la plaque de bobine primaire (7) est disposée de manière fixe.

18. Système selon la revendication 16 ou 17, **caractérisé en ce que** la plaque de bobine primaire (7) est disposée sur une surface de sol (9) pouvant être parcourue par le convoyeur au sol (1).

19. Système selon la revendication 18, **caractérisé en ce que** la plaque de bobine primaire (7) est disposée sur la voie de roulement (9) ou est disposée de manière noyée dans la voie de roulement (9).
